# EUROPÄISCHE PATENTSCHRIFT

(11) **EP 1 359 440 B1**
(45) Veröffentlichungstag und Bekanntmachung des Hinweises auf die Patenterteilung: **11.11.2009**
(21) Anmeldenummer: 03002746.0
(22) Anmeldetag: 06.02.2003
(51) Int. Cl.: G01V 3/10, G01V 3/15

(54) **Verfahren und Vorrichtung zum Detektieren von Uhrwerken**
Method and device for detecting clockworks
Procédé et dispositif de détection d'une horlogerie

(30) Priorität: 29.04.2002 DE 10219110
(43) Veröffentlichungstag der Anmeldung: 05.11.2003
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl

(56) Entgegenhaltungen:
- EP-A- 0 682 270
- FR-A- 2 349 841
- FR-A- 2 753 538
- GB-A- 2 231 157
- US-A- 4 295 095
- US-A- 5 471 143

## Beschreibung

Die vorliegende Erfindung betrifft ein Verfahren und eine Vorrichtung zum Detektieren von Uhrwerken, insbesondere von mechanischen Uhrwerkszündern.

In internationalen Terrorszenarien wird die Bevölkerung mit sogenannten "unkonventionellen Spreng- und Brandvorrichtungen" (USBV) konfrontiert. Hierbei handelt ,es sich um "Home made" (IED) bzw. um selbstgebaute Sprengkörper, die im Rahmen subversiver Anschläge Verwendung finden.

Zum Auffinden solcher Spreng- und Brandvorrichtungen sind verschiedene Suchmethoden, wie z.B. auf der Basis von Radar-, Körperschall- oder Sprengstoffdetektion bekannt. Je nach Suchsituation arbeiten diese bekannten Methoden aber nicht immer zuverlässig.

Da wegen der einfachen Bauart mechanische Uhrwerke in subversiven Kreisen noch immmer bevorzugt als Zündmittel verwendet werden, kann prinzipiell mit Hilfe eines elektronischen Stethoskops der Körperschall des von dem mechanischen Uhrwerkszünder ausgesandten Tickgeräuschs nachgewiesen werden. Im Falle einer fehlenden oder zu schwachen mechanischen Ankopplung der Schallquelle an das Stethoskop ist dies jedoch nicht möglich.

Die Radartechnik ermöglicht eine berührungslose Suche nach mechanischen Uhrwerkszündern in nicht metallenen Medien. Eine oszillierende Uhrwerksunruhe moduliert dabei das Radarsignal, welches als Reflektion aufgenommen und akustisch beispielsweise wieder als Tickgeräusch umgesetzt wird. Wenn sich das USBV jedoch in einem Metallbehältnis, wie z.B. in einem Feuerlöscher befindet, versagt diese Methode wegen des Abschirmeffektes des Metalls.

Ein weiteres Problem besteht darin, dass auf Grund der Bauart bestimmter Uhrwerke eine Detektion mittels Radarsignal nicht mehr möglich ist.

Die FR-A-2349841, EP-A-0682270, US-A-4295095 und US-A-5471143 beschreiben jeweils Vorrichtungen und Verfahren um im Erdboden vergrabene elektrisch leitende Leitungen oder Rohre aufzufinden. Hierbei wird das vergrabene Rohr oder die Leitung mit einem elektrischen Wechselfeld angeregt. Das von der Leitung oder dem Rohr daraufhin abgestrahlte elektrische Wechselfeld wird von einer Sensoreinrichtung, welche meist mehrere Spulen aufweist, empfangen. Aufgrund der unterschiedlichen Signale der Spulen können Aussagen über die Entfernung bzw. Lage der sich im Erdboden befindlichen Leitungen oder des Rohr getätigt werden.

Aus der FR-A-2753538 ist ein Minendetektor bekannt. Mit der dort beschriebenen Einrichtung können Minen sowohl taktil gesucht werden als auch mittels eines Metalldetektors. Der Metalldetektor weist zwei Oszillatoren auf, wovon einer durch die Anwesenheit von metallischen Objekten beeinflusst wird. Der Unterschied in der Oszillationsfrequenz dieser beiden Oszillatoren wird ausgewertet, um das Vorhandensein von elektrischen Objekten anzuzeigen.

Ein weiterer Metalldetektor ist in der GB-A-2231157 beschrieben. Dieser weist eine Spule auf, welche mit einem Wechselstrom beaufschlagt wird. Anhand der Phasen am Eingang der Spule und am Ausgang der Spule bzw. deren Differenz kann das Vorhandensein eines metallischen Objektes detektiert werden.

**Aufgabe** der Erfindung ist es, ein verbessertes Verfahren und eine verbesserte Vorrichtung zum Detektieren von Uhrwerken, insbesondere von mechanischen Uhrwerkszündern, anzugeben.

Diese Aufgabe wird bezüglich des ersten Aspekts durch ein Verfahren mit den Merkmalen des Patentanspruches 1 gelöst.

Erfindungsgemäß werden bei einem Verfahren zum Detektieren von Uhrwerken, insbesondere von mechanischen Uhrwerkszündern, magnetische Impulse, die von dem Uhrwerk ausgesendet werden, nachgewiesen und in elektrische Signale umgesetzt und die elektrischen Signale werden in eine für einen Benutzer wahrnehmbare Anzeige umgesetzt.

Bezüglich des zweiten Aspekts wird die genannte Aufgabe durch eine Vorrichtung mit den Merkmalen des Patentanspruches 5 gelöst. Diese Vorrichtung ist insbesondere zur Durchführung des erfindungsgemäßen Verfahrens geeignet.

Erfindungsgemäß weist eine Vorrichtung zum Detektieren von Uhrwerken, insbesondere von mechanischen Uhrwerkszündern, eine Nachweiseinrichtung zum Nachweis von magnetischen Impulsen, die von dem Uhrwerk ausgesendet werden, und zur Umsetzung der magnetischen Impulse in elektrische Signale auf. Weiterhin ist bei der erfindungsgemäßen Vorrichtung eine Anzeigeeinrichtung, welche mit der Nachweiseinrichtung zusammenwirkt, zum Umsetzen der elektrischen Signale in eine für einen Benutzer wahrnehmbare Anzeige vorgesehen.

Bevorzugte Weiterbildungen des erfindungsgemäßen Verfahrens und vorteilhafte Ausführungsformen der erfindungsgemäßen Vorrichtung sind Gegenstand der Unteransprüche.

Als ein wesentlicher Kerngedanke der vorliegenden Erfindung kann angesehen werden, dass, im Gegensatz zu den im Stand der Technik bekannten Nachweismethoden, die von einem nachzuweisenden Uhrwerk, insbesondere z.B. von einem mechanischen 1-Hz-Schrittschaltwerk für einen elektrischen Uhrwerkszünder ausgesandten magnetischen Impulse zur Detektion herangezogen werden.

Auf diese Weise kann als essenzieller Vorteil erreicht werden, dass ein Nachweis eines Uhrwerks sowohl im Fall einer fehlenden mechanischen Ankopplung zur Nachweiseinrichtung als auch im Fall eines in einem Metallbehältnis untergebrachten Uhrwerkszünders möglich ist. Es werden somit die Vorteile eines Stethoskops mit denjenigen einer Radarnachweiseinrichtung kombiniert.

Bevorzugt ist die Nachweiseinrichtung als Induktionseinrichtung mit mindestens einer Spule ausgebildet, wobei zur Erhöhung der Induktivität ein Ferritkern vorgesehen sein kann. Die Spule kann dabei prinzipiell jede beliebige Form aufweisen, wobei aber für praktische Zwecke, beispielsweise für den Einsatz in Handsuchgeräten, stabförmige Spulen oder kreis- bzw. ovalförmige Luftspulen bevorzugt sind.

Zur Erhöhung der Nachweisempfindlichkeit ist zweckmäßig eine mit der Nachweiseinrichtung und mit der Anzeigeeinrichtung zusammenwirkende Verstärkungseinrichtung zum Verstärken der elektrischen Signale vorgesehen. Hierbei kann es sich um eine aus diskreten Bauelementen aufgebaute Schaltung, aber auch um integrierte Schaltungen handeln.

Darüber hinaus kann ein nachgewiesenes Signal mit Hilfe einer induktiven Übertragungseinrichtung, insbesondere einem Transformator, der mit der Nachweiseinrichtung und der Anzeigeeinrichtung zusammenwirkt, auf eine höhere Spannung transformiert werden.

Eine höhere Selektivität und Nachweisempfindlichkeit kann erzielt werden, wenn die von dem Uhrwerk ausgesendeten magnetischen Impulse in elektrische Stromsignale umgesetzt werden. Die Nachweiseinrichtung weist dann bevorzugt Mittel zur Umsetzung eines durch die magnetischen Impulse induzierten Stromsignals in ein elektrisches Spannungssignal auf, wobei insbesondere ein rückgekoppelter Operationsverstärker eingesetzt werden kann.

Ein solcher Stromeingang hat den Vorteil, dass ein Hochtransformieren des Signals mit Hilfe eines Transformators nicht mehr notwendig ist und der Transformator somit entfallen kann. Die Schaltung kann somit kompakter ausgelegt werden.

Eine Unterdrückung von Störungen und eine weitere Erhöhung der Nachweisempfindlichkeit kann erreicht werden, wenn das elektrische Signal gefiltert wird, wobei zweckmäßig insbesondere eine enthaltene 1-Hz-Komponente oder eine andere für einen bestimmten Uhrwerkstyp spezifische Frequenzkomponente selektiert wird. Hierzu ist eine mit der Nachweiseinrichtung und der Anzeigeeinrichtung zusammenwirkende Filtereinrichtung vorgesehen, welche als digitales Filter oder als steilflankiges analoges Filter, insbesondere als Bandpassfilter, ausgebildet sein kann.

Der Magnetpuls, der durch die akustische Schwingung, d. h. das Ticken moduliert wird, ist relativ steilflankig, was der Übertragung hoher Frequenzen gleichkommt. Als vorteilhaft hat sich erwiesen, das Frequenzspektrum der niederfrequenten Modulation, insbesondere im Bereich 500 - 5000 Hz, welches durch das Ticken entsteht, mittels eines Bandpassfilters zu selektieren bzw. herauszufiltern.

Die elektrischen Signale werden in der Anzeigeeinrichtung bevorzugt in ein für einen Nutzer wahrnehmbares akustisches oder optisches Signal umgesetzt, wobei die Anzeigeeinrichtung hierfür entsprechende Mittel zum akustischen und/oder optischen Anzeigen aufweist. Beispielsweise kann hierfür ein Lautsprecher oder ein piezoelektrischer Summer vorgesehen sein.

Für den praktischen Einsatz, beispielsweise für Kontrollen auf Flughäfen kann es zweckmäßig sein, eine als Handgerät ausgebildete Sonde vorzusehen, in der zumindest die Nachweiseinrichtung aufgenommen ist, und weiterhin eine separate Einheit zur Aufnahme der weiteren Komponenten vorzusehen. Das Handgerät kann dann sehr leicht und kompakt aufgebaut werden, wodurch eine sehr gute Handhabbarkeit erzielt wird.

Weitere Vorteile und Eigenschaften des erfindungsgemäßen Verfahrens und der erfindungsgemäßen Vorrichtung werden nachstehend unter Bezugnahme auf die beigefügten schematischen Figuren beschrieben.

Dort zeigt:
- Fig. 1: eine schematische schaltungstechnische Darstellung eines ersten Ausführungsbeispiels der erfindungsgemäßen Vorrichtung;
- Fig. 2: eine schematische schaltungstechnische Darstellung eines Detektorteiles eines zweiten Ausführungsbeispiels der erfindungsgemäßen Vorrichtung;
- Fig. 3: ein erstes Beispiel einer als Handgerät ausgebildeten Sonde und
- Fig. 4: ein zweites Beispiel einer als Handgerät ausgebildeten Sonde.

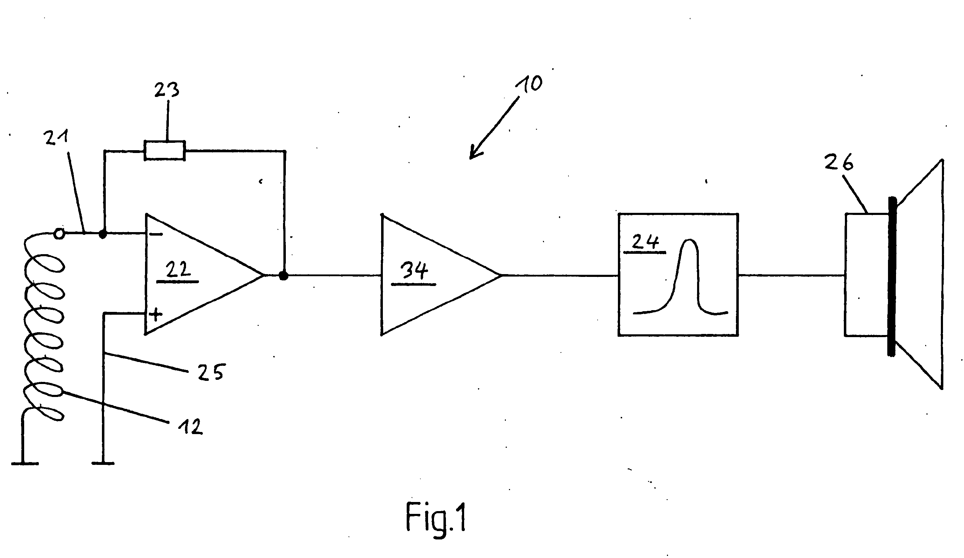

Bei dem in Fig. 1 dargestellten Ausführungsbeispiel handelt es sich um eine Variante mit besonders guter Selektivität und Nachweisempfindlichkeit mit einem sogenannten Stromeingang. Die magnetischen Impulse werden dabei in elektrische Stromsignale umgesetzt.

Bei der gezeigten erfindungsgemäßen Vorrichtung 10 ist zum Nachweis der von einem Uhrwerk ausgesandten magnetischen Impulse eine Spule 12 vorgesehen, die an einem Ende auf Masse gelegt und am anderen Ende mit dem invertierenden Eingang 21 eines Operationsverstärkers 22 verbunden ist. Der nicht invertierende Eingang 25 des Operationsverstärkers 22 ist ebenfalls auf Masse gelegt. Über einen Rückkoppelwiderstand 23 ist der Ausgang des Operationsverstärkers 22 auf den invertierenden Eingang 21 rückgekoppelt.

Der Operationsverstärker 22 ist mit einem Zwischenverstärker 34 verbunden, dessen Ausgang an eine Filtereinrichtung 24 angeschlossen ist. Ein Ausgang der Filtereinrichtung 24 ist mit einem Lautsprecher 26 als akustischer Anzeigeeinrichtung verbunden.

Die Arbeitsweise der erfindungsgemäßen Vorrichtung wird im Folgenden beschrieben.

Magnetische Impulse, die von einem Uhrwerk ausgesandt werden, induzieren in der Induktivität 12 einen Strom, der durch den rückgekoppelten Operationsverstärker 22 in der Wirkung eines Strom-Spannungswandlers verstärkt und in ein Spannungssignal umgesetzt wird. Dieses Spannungssignal wird in dem Zwischenverstärker 34 weiter verstärkt und anschließend in der Filtereinrichtung 24 gefiltert, bevor es mit Hilfe des Lautsprechers 26 in ein für einen Benutzer wahrnehmbares akustisches Signal umgewandelt wird. Der Stromeingang zum Operationsverstärker hat sich als besonders günstig in Bezug auf ein elektrisch störendes Umfeld erwiesen.

Der Stromeingang hat den Vorteil, dass das umgebende elektrische Störspektrum in geringerem Maße von der Detektorspule aufgenommen wird. Durch die Filtereinrichtung 24, die bevorzugt als Bandpassfilter ausgelegt ist, können externe Störungen weitgehend unterdrückt und die Verstärkung des aufgenommenen Magnetpulses wesentlich erhöht werden, so dass das Nutzsignal entsprechend besser erkennbar wird.

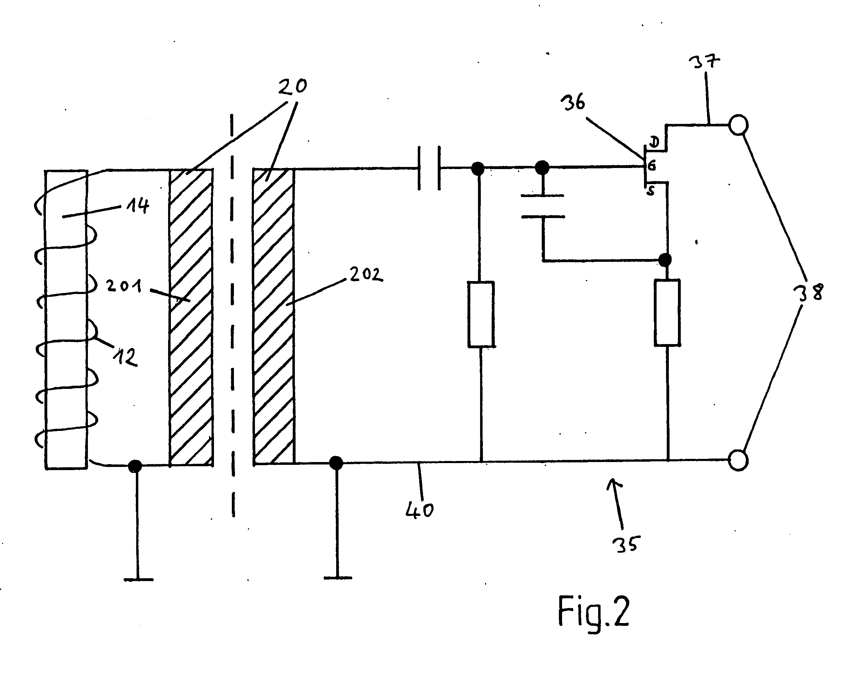

Bei dem in Fig. 2 schematisch dargestellten Ausführungsbeispiel handelt es sich um eine einfache, jedoch sehr wirkungsvolle Suchanordnung. Die Schaltung unterscheidet sich von derjenigen der Figur 1 zunächst dadurch, dass die Spule 12 zur Erhöhung der Nachweisempfindlichkeit mit einem Ferritkern 14 ausgestattet ist.

Ein weiterer Unterschied zu Fig. 1 besteht darin, dass die magnetischen Impulse nicht in Stromsignale, sondern in Spannungssignale umgesetzt werden. Hierzu ist die Spule 12, die mit einem Ende auf Masse gelegt ist, mit einer Primärwicklung 201 eines Transformators 20 verbunden. Die Sekundärwicklung 202 des Transformators 20, der als Übertrager wirkt, ist mit einer aus separaten Bauelementen aufgebauten Verstärkerschaltung 35 verbunden, bei der als aktives Bauelement ein Transistor 36, bei dem es sich insbesondere um einen FET-Transistor handeln kann, vorgesehen ist. Ein Ausgangsanschluss 37 des Transistors 36 bildet zusammen mit der Masseleitung 40 die Ausgangsanschlüsse 38, die, dem Ausführungsbeispiel aus Fig. 1 entsprechend, an einen Lautsprecher angeschlossen werden können.

Die Zuführung der Versorgungsspannung und die Ankopplung des Ausgangssignals erfolgt in beiden Fällen jeweils mit normalen Koaxialleitungen.

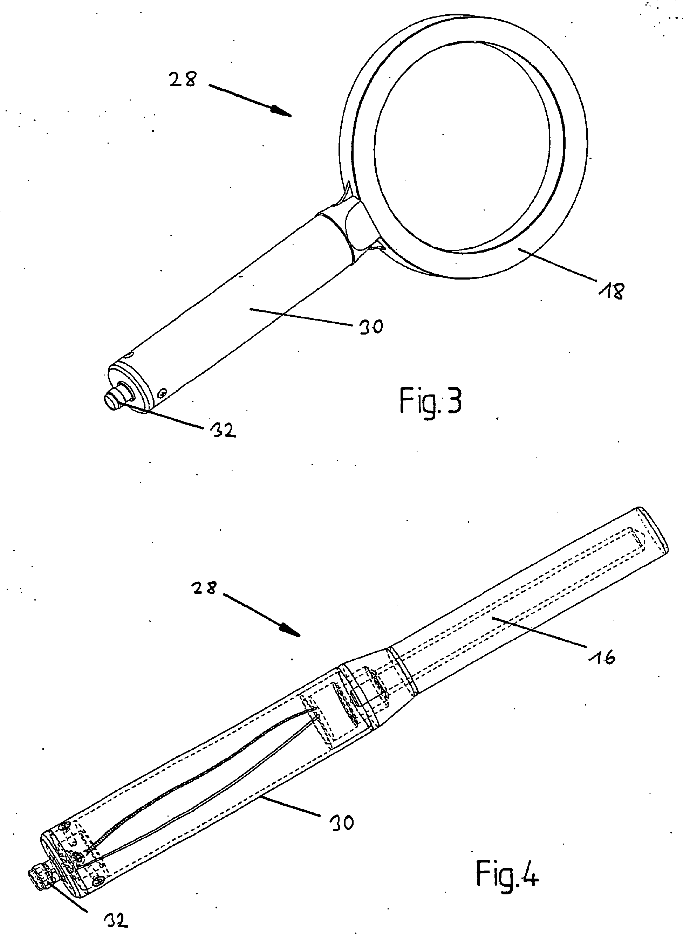

In den Fig. 3 und 4 sind praktische Ausführungsformen von als Handgerät 28 ausgebildeten Sonden dargestellt.

Bei dem in Fig. 3 dargestellten Beispiel ist in einem ringförmigen Gehäuse 18, welches an einem Handgriff 30 angeordnet ist, eine Luftspule als Nachweiseinrichtung vorgesehen.

Im Gegensatz dazu ist bei dem in Fig. 4 gezeigten Ausführungsbeispiel eines Handgeräts eine stabförmige Spule 16 vorgesehen (in Fig. 4 gestrichelt gezeichnet).

An den den Spulen gegenüberliegenden Enden des Handgriffs 30 ist bei den Ausführungsformen der Figuren 3 und 4 jeweils eine BNC-Buchse zum Anschluss eines Koaxialkabels und zur Verbindung des Handgeräts 28 mit einer Verstärker- und Anzeigeeinrichtung vorgesehen.

## Patentansprüche

1. Verfahren zum Detektieren von Uhrwerken, insbesondere Uhrwerkszündern,
bei dem magnetische Impulse, die von dem Uhrwerk ausgesendet werden, nachgewiesen und in elektrische Signale umgesetzt werden,
wobei die elektrischen Signale nach einer enthaltenen niederfrequenten Modulation im Bereich von 500 - 5000 Hz gefiltert werden,
bei dem die elektrischen Signale in eine für einen Benutzer wahrnehmbare Anzeige umgesetzt werden,
wobei die magnetischen Impulse in einer Induktivität (12) einen Strom induzieren und
der Strom durch einen rückgekoppelten Operationsverstärker (22) in der Wirkung eines Strom-Spannungswandlers verstärkt und in ein Spannungssignal umgesetzt wird.

2. Verfahren nach Anspruch 1,
**dadurch gekennzeichnet,**
**dass** die von dem Uhrwerk ausgesendeten magnetischen Impulse induktiv nachgewiesen werden.

3. Verfahren nach Anspruch 1 oder 2,
**dadurch gekennzeichnet,**
**dass** die von dem Uhrwerk ausgesendeten magnetischen Impulse in elektrische Stromsignale umgesetzt werden.

4. Vorrichtung zum Detektieren von Uhrwerken, insbesondere Uhrwerkszündern,
mit einer Nachweiseinrichtung (12) zum Nachweis von magnetischen Impulsen, die von dem Uhrwerk ausgesendet werden, und zur Umsetzung der magnetischen Impulse in elektrische Signale
mit einer Anzeigeeinrichtung (26), welche mit der Nachweiseinrichtung (12) zusammenwirkt zum Umsetzen der elektrischen Signale in eine für einen Benutzer wahrnehmbaren Anzeige,
wobei zur Unterdrückung von Störungen eine mit der Nachweiseinrichtung (12) und der Anzeigeeinrichtung (26) zusammen wirkende Filtereinrichtung (24) vorgesehen ist,
wobei die Filtereinrichtung (24) als digitales oder analoges Bandpassfilter zur Selektion im Bereich 500 - 5000 Hz ausgebildet ist,
wobei eine Verstärkungseinrichtung (34, 35), welche mit der Nachweiseinrichtung (12) und mit der Anzeigeeinrichtung zusammenwirkt, zum Verstärken der elektrischen Signale vorgesehen ist und
die Nachweiseinrichtung (12) einen rückgekoppelten Operationsverstärker (22) in der Wirkung eines Strom-Spannungswandlers zur Umsetzung eines durch die magnetischen Impulse induzierten Stromsignals in ein elektrisches Spannungssignal aufweist.

5. Vorrichtung nach Anspruch 4,
**dadurch gekennzeichnet,**
**dass** die Nachweiseinrichtung als Induktionseinrichtung mit mindestens einer Spule (12), insbesondere mit Ferritkern (14), ausgebildet ist.

6. Vorrichtung nach Anspruch 5,
**dadurch gekennzeichnet,**
**dass** die Spule stabförmig oder als Luftspule ausgebildet ist.

7. Vorrichtung nach einem der Ansprüche 4 bis 6,
**dadurch gekennzeichnet,**
**dass** eine Verstärkungseinrichtung (34, 35), welche mit der Nachweiseinrichtung (12) und mit der Anzeigeeinichtung zusammenwirkt, zum Verstärken der elektrischen Signale vorgesehen ist.

8. Vorrichtung nach einem der Ansprüche 4 bis 7,
**dadurch gekennzeichnet,**
**dass** eine induktive Übertragungseinrichtung, insbesondere ein Transformator (20), welche mit der Nachweiseinrichtung (12) und der Anzeigeeinrichtung (26) zusammenwirkt, vorgesehen ist.

9. Vorrichtung nach einem der Ansprüche 4 bis 8,
**dadurch gekennzeichnet,**
**dass** die Anzeigeeinrichtung (26) Mittel zum akustischen und/oder optischen Anzeigen aufweist.

10. Vorrichtung nach Anspruch 9,
**dadurch gekennzeichnet,**
**dass** ein Lautsprecher (26) oder piezoelektrischer Summer als Mittel zur akustischen Anzeige vorgesehen ist.

11. Vorrichtung nach einem der Ansprüche 4 bis 10,
**dadurch gekennzeichnet,**
**dass** eine als Handgerät (28) ausgebildete Sonde vorgesehen ist, in welcher zumindest die Nachweiseinrichtung (12) aufgenommen ist, und
**dass** eine separate Einheit zur Aufnahme der weiteren Komponenten vorgesehen ist.

## Claims

1. Method for detecting clockwork mechanisms, in particular timer mechanisms,
wherein magnetic impulses emitted by the clockwork mechanism are detected and converted into electrical signals,
wherein the electrical signals are filtered according to a contained low frequency modulation in the range of 500 - 5000 Hz,
wherein the electrical signals are converted into a display recognisable to the user,
wherein the magnetic impulses induce a current in an inductance (12) and
the current is amplified through a feedback operation amplifier (22) in the effect of a current to voltage converter and converted into a voltage signal.

2. Method according to claim 1,
**characterised in that**
the magnetic impulses emitted by the clockwork mechanism are inductively detected.

3. Method according to claim 1 or 2,
**characterised in that**
the magnetic impulses emitted by the clockwork mechanism are converted into electrical current signals.

4. Device for detecting clockwork mechanisms, in particular timer mechanisms, having a detection unit (12) for detecting magnetic impulses emitted by the clockwork mechanism and for converting the magnetic impulses into electrical signals,
having a display unit (26) which cooperates with the detection unit (12) for the conversion of the electrical signals into a display recognisable to the user,
whereby in order to suppress interference a filter unit (24) is provided which cooperates with the detection unit (12) and the display unit (26),
whereby the filter unit (24) is formed as a digital or analogue band pass filter for selection in the range of 500 - 5000 Hz,
whereby an amplifying unit (34, 35) which cooperates with the detection unit (12) and with the display unit is provided for amplifying the electrical signals and
the detection unit (12) comprises a feedback operation amplifier (22) in the effect of a current to voltage converter for converting a current signal induced by the magnetic impulses into an electrical voltage signal.

5. Device according to claim 4,
**characterised in that**
the detection unit is formed as an induction unit with at least one coil (12), in particular with a ferritic core (14).

6. Device according to claim 5,
**characterised in that**
the coil is formed in a rod shape or as an air coil.

7. Device according to one of the claims 4 to 6,
**characterised in that**
an amplifying unit (34, 35) which cooperates with the detection unit (12) and with the display unit is provided for amplifying the electrical signals.

8. Device according to one of the claims 4 to 7,
**characterised in that**
an inductive transmission unit, in particular a transformer (20), which cooperates with the detection unit (12) and the display unit (26) is provided.

9. Device according to one of the claims 4 to 8,
**characterised in that**
the display unit (26) comprises means for acoustic and / or optical displays.

10. Device according to claim 9,
**characterised in that**
a loud speaker (26) or piezoelectric buzzer is provided as means for acoustic display.

11. Device according to one of the claims 4 to 10,
**characterised in that**
a probe formed as a hand-held unit (28) is provided, in which at least the detection unit (12) is received, and
**in that** a separate unit for receiving the further components is provided.

## Revendications

1. Procédé de détection de minuteries, en particulier de détonateurs à minuterie, dans lequel des impulsions magnétiques qui sont émises par la minuterie sont détectées et transformées en signaux électriques,
les signaux électriques étant filtrés suivant une modulation basse fréquence obtenue sur la plage de 500 - 500 Hz,
dans lequel les signaux électriques sont transformés en une signalisation perceptible par un utilisateur,
les impulsions magnétiques induisant un courant dans une inductance (12), et
le courant étant amplifié par un amplificateur opérationnel (22) à rétrocouplage ayant l'effet d'un convertisseur courant-tension et étant converti en un signal de tension.

2. Procédé selon la revendication 1, ***caractérisé en ce que*** les impulsions magnétiques émises par la minuterie sont détectées par une méthode inductive.

3. Procédé selon la revendication 1 ou 2, ***caractérisé en ce que*** les impulsions magnétiques émises par la minuterie sont transformées en signaux électriques de courant.

4. Dispositif de détection de minuteries, en particulier de détonateurs à minuterie, avec un dispositif de détection (12) pour détecter des impulsions magnétiques qui sont émises par la minuterie, et pour convertir les impulsions magnétiques en signaux électriques,
avec un dispositif de signalisation (26) qui coopère avec le dispositif de détection (12) pour transformer les signaux électriques en une signalisation perceptible par un utilisateur,
dans lequel, pour éviter les parasites, il est prévu un dispositif de filtrage (24) coopérant avec le dispositif de détection (12) et le dispositif de signalisation (26),
le dispositif de filtrage (24) étant conformé en filtre passe-bande analogique ou numérique en vue d'une sélection dans la plage de 500 - 5000 Hz,
un dispositif d'amplification (34, 35), qui coopère avec le dispositif de détection (12) et avec le dispositif de signalisation, étant prévu pour amplifier les signaux électriques, et
le dispositif de détection (12) comprenant un amplificateur opération (22) rétrocouplage ayant l'effet d'un convertisseur courant-tension pour transformer un signal de courant induit par les impulsions magnétiques en un signal électrique de tension.

5. Dispositif selon la revendication 4, ***caractérisé en ce que*** le dispositif de détection est conformé en dispositif à induction avec au moins une bobine (12), en particulier avec une âme (14) en ferrite.

6. Dispositif selon la revendication 5, ***caractérisé en ce que*** la bobine est conformée en barreau ou en bobine à air.

7. Dispositif selon l'une quelconque des revendications 4 à 6, ***caractérisé en ce qu*'**un dispositif d'amplification (34, 35) qui coopère avec le dispositif de détection (12) et avec le dispositif de signalisation est prévu pour amplifier les signaux électriques.

8. Dispositif selon l'une quelconque des revendications 4 à 7, ***caractérisé en ce qu*'**il est prévu un dispositif inductif de transfert, en particulier un transformateur (20) qui coopère avec le dispositif de détection (12) et le dispositif de signalisation (26).

9. Dispositif selon l'une quelconque des revendications 4 à 8, ***caractérisé en ce que*** le dispositif de signalisation (26) comprend des moyens pour une signalisation acoustique et/ou optique.

10. Dispositif selon la revendication 9, ***caractérisé en ce qu*'**un haut-parleur (26) ou un buzzer piézoélectrique est prévu comme moyen de signalisation acoustique.

11. Dispositif selon l'une quelconque des revendications 4 à 10,
***caractérisé***
***en ce qu*'**une sonde conformée en appareil portatif (28) est prévue, dans laquelle est logé au moins le dispositif de détection (12), et
***en ce qu***'une unité séparée est prévue pour recevoir les autres composants.
